# EUROPÄISCHE PATENTSCHRIFT

(11) **EP 4 265 392 B1**
(45) Veröffentlichungstag und Bekanntmachung des Hinweises auf die Patenterteilung: **11.09.2024**
(21) Anmeldenummer: 22169284.1
(22) Anmeldetag: 21.04.2022
(51) Int. Cl.: B29C 51/08, B29C 51/38, B65B 47/06, B21D 22/22, B21D 24/04, B31B 50/59, B31F 1/00, B29K 1/00, B29L 31/00

(54) **FORMVORRICHTUNG UND VERFAHREN ZUM FORMEN EINES NAPFS IN EIN VERPACKUNGSMATERIAL**
SHAPING DEVICE AND METHOD FOR SHAPING A CUP IN A PACKAGING MATERIAL
APPAREIL DE FORMAGE ET PROCÉDÉ DE FORMAGE D'UNE POCHE DANS UNE MATIÈRE D'EMBALLAGE

(43) Veröffentlichungstag der Anmeldung: 25.10.2023
(73) Patentinhaber: KOCH Pac-Systeme GmbH, 72285 Pfalzgrafenweiler (DE)
(72) Erfinder: DÖLKER, Benjamin, 72285 Pfalzgrafenweiler (DE); GÖTTERT, Tobias, 72285 Pfalzgrafenweiler (DE); WEISSERT, Dennis, 72285 Pfalzgrafenweiler (DE)
(74) Vertreter: Wächter, Jochen

(56) Entgegenhaltungen:
- EP-B1- 3 140 200
- CN-A- 110 153 256
- KR-B1- 102 296 253

## Beschreibung

Die vorliegende Erfindung betrifft eine Formvorrichtung und ein Verfahren zum Formen mindestens eines Napfs in ein Verpackungsmaterial.

Verpackungen weisen häufig mindestens einen in einem Verpackungsmaterial ausgebildeten Napf zur Aufnahme eines Produkts auf, wie es beispielsweise von Verpackungen für medizinische und pharmazeutische Produkte oder für Nahrungs- und Nahrungsergänzungsmittel bekannt ist. Solche Verpackungen können z.B. unter Bildung des mindestens einen Napfs durch Spritzguss oder durch Tiefziehen des mindestens einen Napfs in das Verpackungsmaterial geformt werden.

Ein bekannter Stand der Technik ist eine Formvorrichtung zum Formen mindestens eines Napfs in ein Verpackungsmaterial, wobei die Formvorrichtung zumindest umfasst: eine Matrize, die mindestens eine Ausnehmung aufweist, einen Stempel, der zum Formen des Verpackungsmaterials in die mindestens eine Ausnehmung der Matrize eingerichtet ist, und einen Niederhalter, wobei der Niederhalter und die Matrize dazu eingerichtet sind, das Verpackungsmaterial in einem Haltebereich, der die mindestens eine Ausnehmung der Matrize umgibt, zwischen sich aufzunehmen, wobei die Matrize im Haltebereich eine erste Lagerfläche aufweist, die dem Niederhalter zugewandt ist, und der Niederhalter im Haltebereich eine zweite Lagerfläche aufweist, die der Matrize zugewandt ist. Das folgende Verfahren zum Formen mindestens eines Napfs in ein Verpackungsmaterial mittels einer Formvorrichtung, ist ebenfalls bekannt. Das Verfahren fasst die folgenden Schritte um: Positionieren des Verpackungsmaterials zwischen einer Matrize und einem Niederhalter der Formvorrichtung; Schließen der Formvorrichtung durch eine Relativbewegung zwischen der Matrize und dem Niederhalter; und Einformen des Verpackungsmaterials mittels eines Stempels der Formvorrichtung in mindestens eine Ausnehmung der Matrize.

Beim Tiefziehen werden die verwendeten Werkzeuge in Form einer Matrize und eines Niederhalters häufig erwärmt, unter anderem um die Reibung zwischen dem Verpackungsmaterial und den Werkzeugen zu reduzieren und einer Faltenbildung des Verpackungsmaterials entgegenzuwirken. Die Erwärmung der Werkzeuge kann sich jedoch nachteilig auf den Formprozess sowie auf das Verpackungsmaterial auswirken. Besonders nachteilig wirkt sich die Erwärmung der Werkzeuge bei faserbasierten Verpackungsmaterialien aus, da diese zur Verbesserung ihrer Verformbarkeit in der Regel befeuchtet sind und sich die zusätzliche Erwärmung negativ auf die Verformbarkeit des Verpackungsmaterials auswirken kann.

Es ist daher eine Aufgabe der vorliegenden Erfindung, eine Formvorrichtung und ein Verfahren zum Formen mindestens eines Napfs in ein Verpackungsmaterial bereitzustellen, die die Nachteile des Stands der Technik überwinden und insbesondere eine gute Verformbarkeit des Verpackungsmaterials gewährleisten, ohne sich nachteilig auf den Formprozess sowie auf das Verpackungsmaterial auszuwirken.

Diese Aufgabe wird durch den Gegenstand des Anspruchs 1 bzw. 9 gelöst. Bevorzugte Ausführungsformen sind Gegenstand der abhängigen Ansprüche.

Eine Formvorrichtung zum Formen mindestens eines Napfs in ein Verpackungsmaterial umfasst eine Matrize, die mindestens eine Ausnehmung aufweist, einen Stempel, der zum Formen des Verpackungsmaterials in die mindestens eine Ausnehmung der Matrize einge-13583 P 1231 EP richtet ist, und einen Niederhalter, wobei der Niederhalter und die Matrize dazu eingerichtet sind, das Verpackungsmaterial in einem die mindestens eine Ausnehmung der Matrize umgebenden Haltebereich zwischen sich aufzunehmen. Die Matrize weist im Haltebereich eine erste Lagerfläche auf, die dem Niederhalter zugewandt ist, und der Niederhalter weist im Haltebereich eine zweite Lagerfläche auf, die der Matrize zugewandt ist. Die erfindungsgemäße Formvorrichtung zeichnet sich dadurch aus, dass die erste Lagerfläche zumindest eine erste Öffnung, vorzugsweise eine Mehrzahl von ersten Öffnungen, aufweist, wobei die zumindest eine erste Öffnung mit einer ersten Fluidquelle in Fluidverbindung steht, und/oder die zweite Lagerfläche zumindest eine zweite Öffnung, vorzugsweise eine Mehrzahl von zweiten Öffnungen, aufweist, wobei die zumindest eine zweite Öffnung mit einer zweiten Fluidquelle in Fluidverbindung steht.

Auf diese Art und Weise wird eine Fluidzufuhr zwischen die erste bzw. zweite Lagerfläche und das Verpackungsmaterial ermöglicht, wodurch das Verpackungsmaterial in der Formvorrichtung aerostatisch gelagert werden kann. Der Kontakt und folglich die Reibung zwischen dem Verpackungsmaterial und der Matrize bzw. dem Niederhalter beim Formen, insbesondere beim Tiefziehen, können dadurch reduziert werden. Die Verringerung der Reibung hat wiederum zur Folge, dass eine Erwärmung der Matrize und des Niederhalters zu diesem Zweck nicht erforderlich ist und negative Auswirkungen des Wärmeeintrags auf das Verpackungsmaterial und den Formprozess vermieden werden können. Auf einen kontinuierlichen Energieeintrag in die Matrize und den Niederhalter zu deren Erwärmung kann verzichtet werden, was sowohl aus ökonomischer als auch aus ökologischer Sicht vorteilhaft ist. In einer bevorzugten Ausführungsform sind die Matrize und der Niederhalter daher unbeheizt.

Ferner kann die mittels der Matrize und des Niederhalters auf das Verpackungsmaterial wirkende Haltekraft aufgrund der reduzierten Reibung erhöht werden, wodurch die Faltenbildung im Verpackungsmaterial reduziert und die Qualität der Verpackungen erhöht wird.

Grundsätzlich ist die Formvorrichtung zum Formen mindestens eines Napfs eingerichtet. Besonders bevorzugt erfolgt das Formen durch Tiefziehen des Verpackungsmaterials. Alle hierin beschriebenen Merkmale und Ausführungsformen beziehen sich daher insbesondere auch auf das Tiefziehen des Verpackungsmaterials, wodurch der mindestens eine Napf gebildet wird. Es können aber auch andere Prozesse, wie z.B. Pressformen, eingesetzt werden.

Die Formvorrichtung kann zum gleichzeitigen Formen einer Mehrzahl von Näpfen in das Verpackungsmaterial ausgebildet sein. Hierzu kann die mindestens eine Ausnehmung der Matrize eine Mehrzahl von Ausnehmungen umfassen. Die Formvorrichtung kann eine Mehrzahl von Stempeln umfassen oder der Stempel kann eine Mehrzahl von Vorsprüngen aufweisen, wobei jeder Vorsprung zum Formen des Verpackungsmaterials in jeweils eine Ausnehmung der Mehrzahl von Ausnehmungen der Matrize eingerichtet ist. Der Niederhalter umgibt vorzugsweise jede Ausnehmung der Mehrzahl von Ausnehmungen der Matrize. Die erfindungsgemäße Formvorrichtung wird nachfolgend stellvertretend anhand einer Ausnehmung und eines Stempels beschrieben, wobei die Merkmale analog auf Ausführungsformen mit einer Mehrzahl von Ausnehmungen, einer Mehrzahl von Stempeln oder Vorsprüngen, sowie einem entsprechenden Niederhalter zutreffen.

Das Verpackungsmaterial kann aus einem Material gebildet sein, das gewählt ist aus einer Gruppe umfassend Metall, beispielsweise Aluminium, Kunststoff, insbesondere thermoplastischen Kunststoff, oder faserbasiertes Material, wie zum Beispiel Papier, Karton oder Textil. Das Verpackungsmaterial kann vollständig aus dem faserbasierten Verpackungsmaterial bestehen oder eine Beschichtung, beispielsweise aus Kunststoff, aufweisen.

Das Verpackungsmaterial ist im Wesentlichen flächig ausgebildet. Das Verpackungsmaterial kann bahnförmig, also als Verpackungsmaterialbahn, oder als Zuschnitt für jeweils eine Verpackung bereitgestellt werden. Verpackungsmaterialbahnen bieten sich insbesondere bei folienartigen Verpackungsmaterialien an.

Mittels der zumindest einen ersten Öffnung bzw. der zumindest einen zweiten Öffnung ist eine Fluidzufuhr in den Haltebereich zwischen der Matrize, dem Niederhalter und dem Verpackungsmaterial möglich. Bei dem Fluid handelt es sich vorzugsweise um ein Gas, besonders bevorzugt um Luft. Bei der ersten und der zweiten Fluidquelle handelt es sich vorzugsweise um eine Druckluftquelle, die zur Abgabe von unter Druck stehender Luft, also Druckluft, eingerichtet ist.

Die Mehrzahl von ersten Öffnungen kann auch mit einer Mehrzahl von Fluidquellen in Fluidverbindung stehen und die Mehrzahl von zweiten Öffnungen kann, unabhängig davon, mit einer Mehrzahl von Fluidquellen in Fluidverbindung stehen, wie weiter unten anhand einer bevorzugten Ausführungsform detaillierter beschrieben. Die erste und die zweite Fluidquelle können jedoch auch integral ausgebildet sein.

Die Fluidzufuhr ermöglicht wiederum die Bildung eines aerostatischen Lagers. Die Matrize und/oder der Niederhalter sind folglich dazu eingerichtet, im Haltebereich ein aerostatisches Lager auszubilden. Im Allgemeinen umfasst das aerostatische Lager einen ersten Lagerpartner und einen zweiten Lagerpartner sowie ein Luftpolster, das den ersten und den zweiten Lagerpartner voneinander trennt. Der erste Lagerpartner kann die Matrize oder Niederhalter sein. Der zweite Lagerpartner ist das Verpackungsmaterial.

Die vorliegende Erfindung betrifft auch eine Formvorrichtung mit Verpackungsmaterial, wobei die Matrize dazu eingerichtet ist, ein erstes aerostatisches Lager zwischen der Matrize und dem Verpackungsmaterial auszubilden, und/oder der Niederhalter dazu eingerichtet ist, ein zweites aerostatisches Lager zwischen dem Niederhalter und dem Verpackungsmaterial auszubilden.

Die Matrize und der Niederhalter wirken zusammen, um das Verpackungsmaterial zu lagern und zu halten, insbesondere um es während des Formens zu fixieren. Grundsätzlich ist das Verpackungsmaterial durch das aerostatische Lager vorzugsweise kontaktfrei und somit reibungsfrei gelagert. In einer bevorzugten Ausführungsform ist sowohl zwischen der Matrize und dem Verpackungsmaterial als auch zwischen dem Niederhalter und dem Verpackungsmaterial jeweils ein aerostatisches Lager ausgebildet. Die Matrize, auch Ziehbüchse genannt, weist die mindestens eine Ausnehmung auf. Die mindestens eine Ausnehmung kann als Durchgangsöffnung oder muldenförmig, also mit einem Boden, ausgebildet sein. Die Matrize kann einen die mindestens eine Ausnehmung umgebenden Flansch aufweisen, der mit dem Niederhalter zum Halten des Verpackungsmaterials im Haltebereich zusammenwirkt. Die erste Lagerfläche umgibt die mindestens eine Ausnehmung vorzugsweise vollständig und ist im Haltebereich parallel zum Verpackungsmaterial angeordnet. Beispielsweise bildet der Flansch die erste Lagerfläche. Zwischen der ersten Lagerfläche und der mindestens einen Ausnehmung, insbesondere an einem Übergang zwischen diesen, kann die Matrize einen Radius aufweisen.

Der Niederhalter, auch Faltenhalter genannt, umgibt den Stempel vorzugsweise vollständig. Der Niederhalter und die Matrize sind bevorzugt in einer Hubrichtung parallel zu einer Bewegungsrichtung des Stempels relativ zueinander bewegbar. Die zweite Lagerfläche ist vorzugsweise parallel zur ersten Lagerfläche angeordnet. Bevorzugt umgibt die zweite Lagerfläche den Stempel vollständig und deckt sich zumindest teilweise oder vollständig mit der ersten Lagerfläche.

Im Haltebereich ist das Verpackungsmaterial folglich zwischen der ersten und der zweiten Lagerfläche aufgenommen. Der Niederhalter und die Matrize üben im Haltebereich eine Haltekraft auf das Verpackungsmaterial aus, die die Faltenbildung im Verpackungsmaterial während des Formens reduziert oder verhindert.

Zum Formen, insbesondere zum Tiefziehen, des Verpackungsmaterials ist der Stempel vorgesehen. Der Stempel ist vorzugsweise in der Bewegungsrichtung beweglich, die im Wesentlichen senkrecht zum unverformten Verpackungsmaterial bzw. zur ersten und zur zweiten Lagerfläche ausgerichtet ist. Dabei erfasst ein freies Ende des Stempels das Verpackungsmaterial und zieht es in die mindestens eine Ausnehmung der Matrize. Das freie Ende des Stempels und/oder die mindestens eine Ausnehmung der Matrize weisen daher bevorzugt die Form des zu bildenden Napfs auf.

Bei dem zumindest einen Napf handelt es sich allgemein um eine Vertiefung bzw. Kavität im Verpackungsmaterial, die zur Aufnahme zumindest eines Produkts ausgebildet ist. Die Größe und Form des zumindest einen Napfs kann beliebig gewählt werden, insbesondere unter Berücksichtigung der Größe und Form des zumindest einen Produkts, und sind nicht auf bestimmte Größen und Formen beschränkt.

Mittels der zumindest einen ersten Öffnungen kann ein Fluid, insbesondere Luft, zwischen die erste Lagerfläche und das Verpackungsmaterial geleitet werden, um das (erste) aerostatische Lager zu bilden. Dadurch wird zwischen der ersten Lagerfläche und dem Verpackungsmaterial ein erstes Luftpolster oder ein erster Luftfilm ausgebildet, die den Kontakt und die Reibung zwischen der Matrize und dem Verpackungsmaterial reduzieren. Um das Verpackungsmaterial möglichst gleichmäßig und großflächig mit Fluid zu beaufschlagen, weist die erste Lagerfläche vorzugsweise eine Mehrzahl von entsprechenden ersten Öffnungen auf.

Die zumindest eine erste Öffnung kann beispielsweise durch einen Schlitz, eine Bohrung oder eine Pore gebildet sein. In einer Ausführungsform weist die erste Lagerfläche einen jeweils eine Ausnehmung vorzugsweise vollständig umgebenden Schlitz oder eine Mehrzahl von die jeweilige Ausnehmung teilweise umgebenden Schlitzen auf. Zusätzlich oder alternativ kann die erste Lagerfläche eine Mehrzahl von Bohrungen aufweisen, die vorzugsweise um jeweils eine Ausnehmung herum verteilt sind.

In einer besonders bevorzugten Ausführungsform umfasst die Matrize eine erste Lagerkomponente, die die mindestens eine Ausnehmung aufweist oder umgibt und die die erste Lagerfläche aufweist. Die erste Lagerkomponente ist zumindest teilweise aus einem porösen Material, insbesondere aus einem Sintermaterial, gebildet, das die Mehrzahl von ersten Öffnungen aufweist. Dabei ist vorzugsweise zumindest der Bereich der ersten Lagerfläche aus dem porösen Material gebildet. Das poröse Material weist eine Vielzahl von Poren und somit eine Vielzahl von ersten Öffnungen auf, wodurch eine möglichst gleichmäßige Druckluftverteilung und somit eine gleichmäßige Bildung des (ersten) aerostatischen Lagers ermöglicht wird.

Mittels der zumindest einen zweiten Öffnung kann ein Fluid, insbesondere Luft, zwischen die zweite Lagerfläche und das Verpackungsmaterial geleitet werden, um das (zweite) aerostatische Lager zu bilden. Dadurch ist zwischen der zweiten Lagerfläche und dem Verpackungsmaterial ein zweites Luftpolster oder ein zweiter Luftfilm ausgebildet, wodurch der Kontakt und die Reibung zwischen dem Niederhalter und dem Verpackungsmaterial reduziert werden. Um das Verpackungsmaterial möglichst gleichmäßig und großflächig mit Fluid zu beaufschlagen, weist die zweite Lagerfläche vorzugsweise eine Mehrzahl von entsprechenden zweiten Öffnungen auf.

Die Mehrzahl von ersten Öffnungen und die Mehrzahl von zweiten Öffnungen können auch mit derselben Fluid- bzw. Druckluftquelle in Fluidverbindung stehen.

Die zumindest eine zweite Öffnung kann beispielsweise durch einen Schlitz, eine Bohrung oder eine Pore gebildet sein. In einer Ausführungsform weist die zweite Lagerfläche einen jeweils eine Ausnehmung vorzugsweise vollständig umgebenden Schlitz oder eine Mehrzahl von die jeweilige Ausnehmung teilweise umgebenden Schlitzen auf. Zusätzlich oder alternativ kann die zweite Lagerfläche eine Mehrzahl von Bohrungen aufweisen, die vorzugsweise um jeweils eine Ausnehmung herum verteilt sind.

In einer besonders bevorzugten Ausführungsform umfasst der Niederhalter eine zweite Lagerkomponente, die den Stempel umgibt und die die zweite Lagerfläche aufweist. Die zweite Lagerkomponente ist zumindest teilweise aus einem porösen Material, insbesondere aus einem Sintermaterial, gebildet, das die Mehrzahl von zweiten Öffnungen aufweist. Dabei ist vorzugsweise zumindest der Bereich der zweiten Lagerfläche aus dem porösen Material gebildet. Das poröse Material weist eine Vielzahl von Poren und somit eine Vielzahl von zweiten Öffnungen auf, wodurch eine möglichst gleichmäßige Druckluftverteilung und somit eine gleichmäßige Bildung des (zweiten) aerostatischen Lagers ermöglicht wird.

Um die auf das Verpackungsmaterial wirkende Haltekraft lokal an die Beanspruchung des Verpackungsmaterials während des Formens anpassen zu können, ist es bevorzugt, dass die zweite Lagerfläche des Niederhalters eine Mehrzahl von Segmenten aufweist, wobei eine Fluidzufuhr zumindest eines ersten Segments der Mehrzahl von Segmenten unabhängig von der Fluidzufuhr zumindest eines weiteren Segments der Mehrzahl von Segmenten regulierbar ist. Z.B. kann die Fluidzufuhr zumindest eines ersten Teils der Mehrzahl von Segmenten unabhängig von einer Fluidzufuhr eines zweiten Teils der Mehrzahl von Segmenten regulierbar sein. Insbesondere ist die Fluidzufuhr jedes Segments der Mehrzahl von Segmenten individuell regulierbar. Besonders bevorzugt ist der Druck regulierbar, mit dem das Fluid zugeführt wird. Jedes Segment der Mehrzahl von Segmenten ist dadurch mit einem bestimmten Druck mit Fluid, z.B. mit Druckluft, beaufschlagbar bzw. betreibbar, der sich von dem Druck zumindest eines anderen Segments unterscheiden kann. Die Fluidzufuhr erfolgt über die Fluidverbindung der Mehrzahl von zweiten Öffnungen zur Fluidquelle.

Die Einteilung der zweiten Lagerfläche in die Mehrzahl von Segmenten kann auf strukturell oder funktionell erfolgen. Eine strukturelle Einteilung erfolgt beispielsweise dadurch, dass die zweite Lagerkomponente eine Mehrzahl von Lagerelementen umfasst, die jeweils mit einer Fluidquelle verbunden sind, wobei vorzugsweise jedes Lagerelement ein Segment der Mehrzahl von Segmenten bildet. Eine funktionelle Einteilung erfolgt beispielsweise dadurch, dass ein erster Teil der zweiten Öffnungen mit der zweiten Fluidquelle und ein zweiter Teil der zweiten Öffnungen mit einer weiteren Fluidquelle verbunden sind. Alternativ können der erste und der zweite Teil der zweiten Öffnungen mit derselben Fluidquelle verbunden sein, wobei entlang der Fluidverbindung des ersten bzw. des zweiten Teils der zweiten Öffnungen mit der Fluidquelle jeweils eine Reguliereinrichtung, wie zum Beispiel ein Druckbegrenzungsventil, vorgesehen ist. Die kann auch für die Mehrzahl von Lagerelementen gelten.

Beispielsweise kann an einem ersten Segment der Mehrzahl von Segmenten ein erster Druck anliegen und an einem zweiten Segment der Mehrzahl von Segmenten ein zweiter Druck anliegen, der sich vorzugsweise vom ersten Druck unterscheidet. Vorzugsweise beträgt der zweite Druck das 2-fache bis 10-fache, mehr bevorzugt das 3-fache bis 4-fache des ersten Drucks. In einem Ausführungsbeispiel kann der erste Druck zwischen 0,5 bar und 5 bar, bevorzugt zwischen 1 und 2 bar betragen und der zweite Druck zwischen 5 und 10 bar, bevorzugt zwischen 6 und 8 bar betragen. Es ist aber auch denkbar, dass der erste Druck dem zweiten Druck entspricht.

Vorzugsweise weist die erste Lagerfläche der Matrize auf analoge Art und Weise eine Mehrzahl von Segmenten auf. Alle bezüglich der Mehrzahl von Segmenten der zweiten Lagerfläche beschriebenen Merkmale sind daher analog auf die Mehrzahl von Segmenten der ersten Lagerfläche übertragbar.

Grundsätzlich kann ein erster Fluidstrom, insbesondere ein erster Luftstrom, aus der zumindest einen ersten Öffnung austreten und auf das Verpackungsmaterial gerichtet sein. Ein zweiter Fluidstrom, insbesondere ein zweiter Luftstrom, kann aus der zumindest einen zweiten Öffnung austreten und ebenfalls auf das Verpackungsmaterial gerichtet sein.

Beim Tiefziehprozess kann es gewünscht sein, dass das zwischen der Matrize und dem Niederhalter aufgenommene Verpackungsmaterial während des Tiefziehens in Richtung der Ausnehmung nachgeführt werden kann. Vorzugsweise sind die zumindest eine erste Öffnung und die zumindest eine zweite Öffnung daher derart ausgebildet, dass der jeweils aus ihnen austretende erste bzw. zweite Fluidstrom eine Strömungsrichtung aufweist, die zumindest teilweise in Richtung der Ausnehmung gerichtet ist. D. h., dass die jeweilige Strömungsrichtung am Austritt aus der zumindest einen ersten bzw. zweiten Öffnung eine Richtungskomponente senkrecht zur ersten bzw. zweiten Lagerfläche und eine Richtungskomponente parallel zur ersten bzw. zweiten Lagerfläche in Richtung der Ausnehmung aufweist.

Die vorliegende Erfindung betrifft auch eine Verpackungsmaschine mit einer erfindungsgemäßen Formvorrichtung. Beispielsweise kann die Verpackungsmaschine eine Blistermaschine sein, wobei die Formvorrichtung zum Formen mindestens eines Blisternapfs in eine Formfolie oder ein flächiges, faserbasiertes Verpackungsmaterial ausgebildet ist. Die Verpackungsmaschine kann weiterhin eine Füllstation zum Befüllen des mindestens einen Napfs mit einem oder mehreren Produkten und eine Schließvorrichtung zum Verschließen des mindestens einen befüllten Napfs umfassen. Die Schließvorrichtung kann beispielsweise als Siegelstation zum Siegeln eines Deckmaterials, wie zum Beispiel einer Deckfolie, an das Verpackungsmaterial ausgebildet sein.

Ein erfindungsgemäßes Verfahren zum Formen mindestens eines Napfs in ein Verpackungsmaterial mittels einer Formvorrichtung umfasst die folgenden Schritte:
Positionieren des Verpackungsmaterials zwischen einer Matrize und einem Niederhalter der Formvorrichtung;
Schließen der Formvorrichtung durch eine Relativbewegung zwischen der Matrize und dem Niederhalter;
Bilden eines aerostatischen Lagers zwischen dem Verpackungsmaterial und dem Niederhalter und/oder zwischen dem Verpackungsmaterial und der Matrize; und Formen des Verpackungsmaterials mittels eines Stempels der Formvorrichtung in mindestens eine Ausnehmung der Matrize.

Auf diese Art und Weise wird das Verpackungsmaterial in der Formvorrichtung aerostatisch gelagert, wodurch der Kontakt und folglich die Reibung zwischen dem Verpackungsmaterial und der Matrize bzw. dem Niederhalter beim Formen reduziert werden kann. Die Verringerung der Reibung hat wiederum zur Folge, dass eine Erwärmung der Matrize und des Niederhalters zu diesem Zweck nicht erforderlich ist und negative Auswirkungen des Wärmeeintrags auf das Verpackungsmaterial und den Formprozess vermieden werden können. Auf einen kontinuierlichen Energieeintrag in die Matrize und den Niederhalter zu deren Erwärmung kann verzichtet werden, was sowohl aus ökonomischer als auch aus ökologischer Sicht vorteilhaft ist. Ferner kann die mittels der Matrize und des Niederhalters auf das Verpackungsmaterial wirkende Haltekraft aufgrund der reduzierten Reibung erhöht werden, wodurch die Faltenbildung im Verpackungsmaterial reduziert und die Qualität der Verpackungen erhöht wird.

Vorzugsweise erfolgt das erfindungsgemäße Verfahren mittels der erfindungsgemäßen Formvorrichtung oder Verpackungsmaschine. Alle bezüglich der Formvorrichtung und der Verpackungsmaschine beschriebenen Merkmale sind daher analog auf das Verfahren übertragbar und umgekehrt.

Die Schritte des Verfahrens werden bevorzugt in der angegebenen Reihenfolge ausgeführt. Folglich wird die Formvorrichtung geschlossen, wenn das Verpackungsmaterial korrekt zwischen der Matrize und dem Niederhalter positioniert ist. Das aerostatische Lager wird vorzugsweise erst gebildet, wenn die Formvorrichtung geschlossen ist. Ist das aerostatische Lager gebildet, erfolgt das Formen, insbesondere das Tiefziehen, des Verpackungsmaterials und dadurch das Formen des mindestens einen Napfs in das Verpackungsmaterial.

Das Verfahren kann zum gleichzeitigen Formen einer Mehrzahl von Näpfen in das Verpackungsmaterial vorgesehen und dazu den Schritt des Formens des Verpackungsmaterials mittels des Stempels in eine Mehrzahl von Ausnehmungen der Matrize umfassen. Entsprechend umfasst die mindestens eine Ausnehmung der Matrize eine Mehrzahl von Ausnehmungen. Die Formvorrichtung kann eine Mehrzahl von Stempeln umfassen oder der Stempel kann eine Mehrzahl von Vorsprüngen aufweisen, wobei jeder Vorsprung zum Formen des Verpackungsmaterials in jeweils eine Ausnehmung der Mehrzahl von Ausnehmungen der Matrize eingerichtet ist. Der Niederhalter umgibt vorzugsweise jede Ausnehmung der Mehrzahl von Ausnehmungen der Matrize. Das erfindungsgemäße Verfahren wird nachfolgend stellvertretend anhand einer Ausnehmung und eines Stempels beschrieben, wobei die Merkmale analog auf Ausführungsformen mit einer Mehrzahl von Ausnehmungen, einer Mehrzahl von Stempeln oder Vorsprüngen, sowie einem entsprechenden Niederhalter zutreffen.

Nach dem Formen kann das aerostatische Lager deaktiviert werden, woraufhin die Formvorrichtung durch eine Relativbewegung zwischen der Matrize und dem Niederhalter geöffnet werden kann. Das aerostatische Lager besteht somit während des gesamten Formprozesses, aber vorzugsweise nur solange die Formvorrichtung geschlossen ist.

Das Positionieren des Verpackungsmaterials zwischen der Matrize und dem Niederhalter kann das Einlegen des Verpackungsmaterials in die Formvorrichtung oder das Ein- bzw. Hindurchführen eines bahnförmigen Verpackungsmaterials in die bzw. durch die Formvorrichtung umfassen.

Das Schließen der Formvorrichtung umfasst vorzugsweise das Bewegen des Niederhalters in Richtung der Matrize, insbesondere in einer Hubrichtung parallel zur Bewegungsrichtung des Stempels beim Formen. Es kann aber auch die Matrize in Richtung des Niederhalters bewegt werden oder es werden die Matrize und der Niederhalter aufeinander zu bewegt.

Der Schritt des Formens des Verpackungsmaterials umfasst vorzugsweise das Bewegen des Stempels in die Bewegungsrichtung, die senkrecht zur im Wesentlichen flächigen Ausbildung des unverformten Verpackungsmaterials ausgerichtet sein kann, das Erfassen des Verpackungsmaterials mit einem freien Ende des Stempels und das Ziehen des erfassten Verpackungsmaterials in die mindestens eine Ausnehmung der Matrize und dadurch das Umformen des Verpackungsmaterials zur Bildung des mindestens einen Napfs.

Beim Umformen wird das Verpackungsmaterial insbesondere in den Eckbereichen des zu erzeugenden Napfs und in den daran angrenzenden Bereichen unterschiedlich stark gedehnt bzw. gestaucht. Beim Tiefziehen entstehen daher Zug- und Druckspannungen im Verpackungsmaterial. Aufgrund der Druckspannungen kann es zur Faltenbildung im Verpackungsmaterial kommen, insbesondere im Haltebereich zwischen dem Niederhalter und der Matrize. Die Faltenbildung ist unter anderem abhängig von der Geometrie des zu formenden Napfs, insbesondere von der Größe der Radien und der Tiefe des Napfs. Aufgrund der Geometrie kann daher die zu erwartende Faltenbildung bestimmt werden.

Der Faltenbildung kann durch die Haltekraft entgegengewirkt werden, die der Niederhalter und die Matrize im Haltebereich auf das Verpackungsmaterial ausüben. Die Haltekraft entspricht einer Normalkraft auf das Verpackungsmaterial. Diese Haltekraft wiederum bewirkt eine Reibungskraft zwischen dem Verpackungsmaterial und den angrenzenden Werkzeugen, also dem Niederhalter und der Matrize.

Bevorzugt bewirkt das aerostatische Lager die Haltekraft auf das Verpackungsmaterial und die daraus resultierende Reibungskraft wirkt der Zugkraft im Material beim Tiefziehen entgegen. Es kann daher in Abhängigkeit der zu erwartenden Faltenbildung eine erforderliche Reibungskraft ermittelt werden, in Abhängigkeit derer wiederum die dafür erforderliche Haltekraft bestimmt werden kann.

Durch den geringen Reibungskoeffizienten des aerostatischen Lagers kann die Haltekraft deutlich erhöht werden, ohne die Streckgrenze des Verpackungsmaterials zu überschreiten. Dadurch können Näpfe mit komplexeren Geometrien, insbesondere mit engeren Radien und/oder größerer Tiefe geformt werden.

Das Verfahren umfasst vorzugsweise weiterhin die Schritte:
Bestimmen der erforderlichen Reibungskraft im Haltebereich in Abhängigkeit von der Geometrie des mindestens einen Napfs;
Ermitteln der Haltekraft in Abhängigkeit von der bestimmten Reibungskraft; und
Bilden des aerostatischen Lagers in Abhängigkeit von der ermittelten Haltekraft.

Die durch die Haltekraft bewirkte Reibungskraft kann größer als die Zugkraft sein, um das Verpackungsmaterial im Haltebereich sicher zwischen der Matrize und dem Niederhalter festzuhalten. Die Reibungskraft kann aber auch kleiner als die Zugkraft sein, um während des Tiefziehens ein Nachführen des Verpackungsmaterials in Richtung der Ausnehmung zu ermöglichen. Es versteht sich, dass die Reibungskraft und die Zugkraft derart ausgelegt sein sollten, dass es zum Umformen des Verpackungsmaterials und somit zur Bildung des mindestens einen Napfs kommt.

Das Bilden des aerostatischen Lagers erfolgt vorzugsweise mittels eines Fluids, bevorzugt mittels Druckluft, das zwischen das Verpackungsmaterial und die Matrize bzw. zwischen das Verpackungsmaterial und den Niederhalter geleitet wird. Der Druck des Fluids ist vorzugsweise einstellbar, wodurch die auf das Verpackungsmaterial ausgeübte Haltekraft variiert werden kann.

Das Bilden des aerostatischen Lagers kann das Bilden des ersten und/oder zweiten aerostatischen Lagers umfassen, wie bezüglich der erfindungsgemäßen Formvorrichtung beschrieben. Grundsätzlich kann in allen hierin beschriebenen Ausführungsformen nur das erste oder nur das zweite aerostatische Lager vorgesehen sein oder es können das erste und das zweite aerostatische Lager vorgesehen sein. Sofern nicht anders beschrieben, gelten sämtliche Ausführungen zum aerostatischen Lager sowohl für das erste als auch für das zweite aerostatische Lager. Umgekehrt kann stets auch nur ein aerostatisches Lager vorgesehen sein, auch wenn eine Ausführungsform beschrieben ist, die das erste und das zweite aerostatische Lager umfasst.

Bezüglich des ersten aerostatischen Lagers umfasst das Bilden des aerostatischen Lagers das Erzeugen eines ersten Fluidpolsters zwischen der ersten Lagerfläche der Matrize und dem Verpackungsmaterial. Zusätzlich oder alternativ umfasst das Bilden des zweiten aerostatischen Lagers das Erzeugen eines zweiten Fluidpolsters zwischen der zweiten Lagerfläche des Niederhalters und dem Verpackungsmaterial.

Das Erzeugen des ersten Fluidpolsters kann wiederum das Zuführen des Fluids zwischen die Matrize und das Verpackungsmaterial über die erste Lagerfläche umfassen, insbesondere mittels der zumindest einen ersten Öffnung. Das Erzeugen des zweiten Fluidpolsters kann wiederum das Zuführen des Fluids zwischen die Niederhalter und das Verpackungsmaterial über die zweite Lagerfläche umfassen, insbesondere mittels der zumindest einen zweiten Öffnung.

Weist die erste Lagerfläche der Matrize eine Mehrzahl von Segmenten auf, umfasst das Bilden des (ersten) aerostatischen Lagers die Schritte:
Abgeben des Fluids mit einem ersten Druck in einem ersten Segment der Mehrzahl von Segmenten; und
Abgeben des Fluids mit einem zweiten Druck in einem zweiten Segment der Mehrzahl von Segmenten, wobei sich der erste und der zweite Druck unterscheiden.

Weist die zweite Lagerfläche des Niederhalters eine Mehrzahl von Segmenten auf, umfasst das Bilden des (zweiten) aerostatischen Lagers die Schritte:
Abgeben des Fluids mit einem ersten Druck in einem ersten Segment der Mehrzahl von Segmenten; und
Abgeben des Fluids mit einem zweiten Druck in einem zweiten Segment der Mehrzahl von Segmenten, wobei sich der erste und der zweite Druck unterscheiden.

Vorzugsweise beträgt der zweite Druck das 2-fache bis 10-fache, mehr bevorzugt das 3-fache bis 4-fache des ersten Drucks.

Weisen sowohl die erste als auch die zweite Lagerfläche jeweils eine Mehrzahl von Segmenten auf, können sich der erste und der zweite Druck an der ersten Lagerfläche vom ersten und vom zweiten Druck an der zweiten Lagerfläche unterscheiden oder diesen entsprechen. Im letzteren Fall können die Drücke auch als erster, zweiter, dritter und vierter Druck bezeichnet werden.

Um das aerostatische Lager wie zuvor beschrieben mittels des Fluids zu bilden, ist ein Fluidstrom auf das Verpackungsmaterial gerichtet. Genauer kann das Bilden des ersten aerostatischen Lagers das Erzeugen zumindest eines ersten Fluidstroms umfassen, der ausgehend von der Matrize bzw. der ersten Lagerfläche auf das Verpackungsmaterial und zumindest teilweise entlang des Verpackungsmaterials in Richtung der Ausnehmung der Matrize gerichtet ist. Das Bilden des zweiten aerostatischen Lagers kann das Erzeugen zumindest eines zweiten Fluidstroms umfassen, der ausgehend vom Niederhalter bzw. der zweiten Lagerfläche auf das Verpackungsmaterial und entlang des Verpackungsmaterials in Richtung des Stempels gerichtet ist.

Weitere Merkmale und Vorteile der vorliegenden Erfindung ergeben sich aus der nachfolgenden Beschreibung unter Bezugnahme auf die beigefügten Zeichnungen.
- Fig. 1: und 2 zeigen eine erfindungsgemäße Formvorrichtung mit Verpackungsmaterial in einer Querschnittsansicht.
- Fig. 3: zeigt einen Ausschnitt der Formvorrichtung nach Fig. 1 und 2 in einer Detailansicht.
- Fig. 4: zeigt eine Lagerfläche eines Niederhalters oder einer Matrize der Formvorrichtung in einer Draufsicht.
- Fig. 5: zeigt schematisch eine Verpackungsmaschine in einer perspektivischen Ansicht.

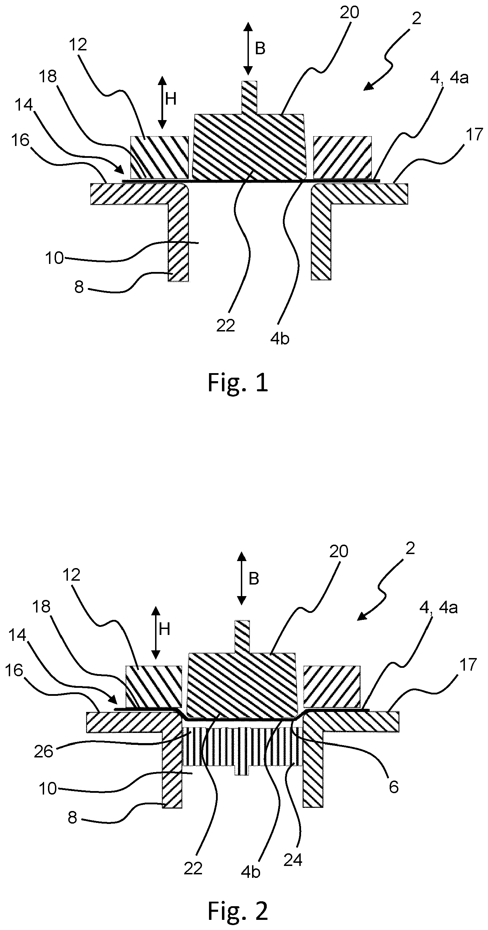

Fig. 1 und Fig. 2 zeigen jeweils eine erfindungsgemäße Formvorrichtung 2 in einer Querschnittsansicht, wobei ein Verpackungsmaterial 4 in die Formvorrichtung 2 eingelegt ist. Das Verpackungsmaterial 4 kann als Zuschnitt bereitgestellt werden oder als Verpackungsmaterialbahn, die sich durch die Formvorrichtung 2 hindurch erstreckt.

Die Formvorrichtung 2 dient zum Formen mindestens eines Napfs 6 in das Verpackungsmaterial 4, wie beispielsweise von Formvorrichtungen zur Bildung von Blisternäpfen in einer Formfolie bekannt. Hierzu umfasst die Formvorrichtung 2 eine Matrize 8, die mindestens eine Ausnehmung 10 aufweist. Weiterhin umfasst die Formvorrichtung 2 einen Niederhalter 12, wobei der Niederhalter 12 und die Matrize 8 das Verpackungsmaterial 4 in einem Haltebereich 14 zwischen sich aufnehmen, der die Ausnehmung 10 umgibt. Die Formvorrichtung 2 kann analog zur dargestellten Ausführungsform eine Matrize 8 mit einer Mehrzahl von Ausnehmungen 10 zur Bildung einer Mehrzahl von Näpfen umfassen.

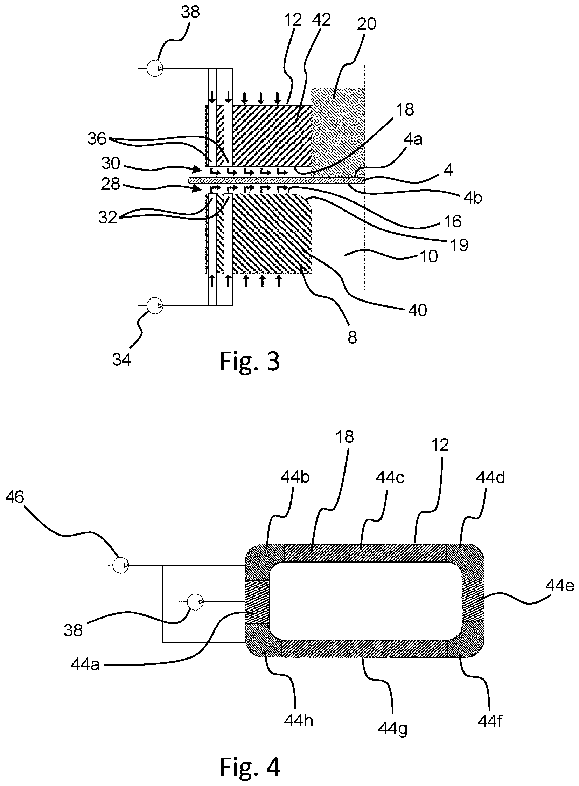

Das Verpackungsmaterial 4 ist im Wesentlichen flächig ausgebildet und weist eine Oberseite 4a und eine Unterseite 4b auf. Die Matrize 8 weist eine erste Lagerfläche 16 auf, die dem Niederhalter 12 sowie der Unterseite 4b des Verpackungsmaterials 4 zugewandt ist und beispielsweise durch einen die Ausnehmung 10 der Matrize 8 umgebenden Flansch 17 gebildet ist. Am Übergang der ersten Lagerfläche 16 zur Ausnehmung 10 weist die Matrize 8 einen Radius 19 auf (s. Fig. 3). Der Niederhalter 12 weist eine zweite Lagerfläche 18 auf, die der Matrize 8 sowie der Oberseite 4a des Verpackungsmaterials 4 zugewandt ist. Im Haltebereich 14 ist das Verpackungsmaterial 4 folglich zwischen der ersten Lagerfläche 16 und der zweiten Lagerfläche 18 aufgenommen.

Um das Verpackungsmaterial 4 in die Formvorrichtung 2 einzuführen und im Haltebereich 14 zwischen der Matrize 8 und dem Niederhalter 12 aufzunehmen, sind die Matrize 8 und der Niederhalter 12 in einer Hubrichtung H relativ zueinander beweglich. Die Hubrichtung H ist bevorzugt senkrecht zur Oberseite 4a des unverformten Verpackungsmaterials 4 bzw. senkrecht zur ersten und zur zweiten Lagerfläche 16, 18 ausgerichtet.

Zum Formen, z.B. zum Tiefziehen, des Verpackungsmaterials 4 in die Ausnehmung 10 umfasst die Formvorrichtung 2 weiterhin einen Stempel 20, der vorzugsweise in einer Bewegungsrichtung B beweglich ist. Die Bewegungsrichtung B ist bevorzugt senkrecht zur Oberseite 4a des unverformten Verpackungsmaterials bzw. senkrecht zur ersten und zur zweiten Lagerfläche 16, 18 ausgerichtet. Der Stempel 20 weist ein freies Ende 22 auf, das dem Verpackungsmaterial 4 zugewandt ist und zum Umformen des Verpackungsmaterials 4 auf dieses trifft.

Die Ausnehmung 10 kann mulden- oder napfförmig in der Matrize 8 oder, wie dargestellt, als Durchgangsöffnung ausgebildet sein. Eine mulden- oder napfförmige Ausnehmung 10 würde vorzugsweise eine mit dem herzustellenden Napf korrespondierende Form aufweisen, insbesondere ein Negativ des Napfs bilden. Alternativ kann beispielsweise ein Gegenstempel 24 vorgesehen sein, der mit dem Stempel 20 zum Formen des Verpackungsmaterials 4 zusammenwirkt, wie in Fig. 2 dargestellt. Aus Gründen der deutlicheren Darstellung ist der Gegenstempel 24 in Fig. 2 in geringem Abstand zum Verpackungsmaterial 4 dargestellt. Der Gegenstempel 24 weist ein freies Ende 26 auf, das der Unterseite 4b des Verpackungsmaterials 4 zugewandt ist.

Im Haltebereich 14 üben die Matrize 8 und der Niederhalter 12 eine Haltekraft auf das Verpackungsmaterial 4 aus, um das Umformen des Verpackungsmaterials 4 durch den Stempel 20 zu ermöglichen und die Bildung von Falten im Verpackungsmaterial 4 zu verhindern. In herkömmlichen Formvorrichtungen wird das Verpackungsmaterial hierzu im Haltebereich zwischen der Matrize und dem Niederhalter mechanisch geklemmt.

In der vorliegenden Formvorrichtung 2 sind die Matrize 8 und/oder der Niederhalter 12 dazu eingerichtet, im Haltebereich 14 ein aerostatisches Lager auszubilden, wie nachfolgend unter Bezugnahme auf Fig. 3 beschrieben. Mittels des aerostatischen Lagers ist das Verpackungsmaterial 4 während des Formens auf zumindest einer Seite im Wesentlichen kontaktlos und somit reibungsfrei gelagert.

In der dargestellten Ausführungsform ist ein erstes aerostatisches Lager 28 zwischen der Matrize 8 und dem Verpackungsmaterial 4 ausgebildet und ein zweites aerostatisches Lager 30 zwischen dem Niederhalter 12 und dem Verpackungsmaterial 4 ausgebildet. Das erste und das zweite aerostatische Lager 28, 30 können unabhängig voneinander vorgesehen und ausgebildet sein. Insbesondere kann auch nur das erste oder das zweite aerostatische Lager 28, 30 vorgesehen sein.

Das erste aerostatische Lager 28 umfasst beispielsweise ein erstes Luftpolster zwischen der ersten Lagerfläche 16 und dem Verpackungsmaterial 4, insbesondere der Unterseite 4b des Verpackungsmaterials 4, das in Fig. 3 durch die Pfeile zwischen der ersten Lagerfläche 16 und der Unterseite 4b des Verpackungsmaterials 4 angedeutet ist. Das zweite aerostatische Lager 30 kann entsprechend ein zweites Luftpolster zwischen der zweiten Lagerfläche 18 und dem Verpackungsmaterial 4, insbesondere der Oberseite 4a des Verpackungsmaterials 4, umfassen, das in Fig. 3 durch die Pfeile zwischen der zweiten Lagerfläche 18 und der Oberseite 4a des Verpackungsmaterials 4 angedeutet ist.

Das erste und das zweite aerostatische Lager 28, 30 bzw. die entsprechenden Luftpolster werden durch das Zuführen eines Fluids, insbesondere von Druckluft, zwischen das Verpackungsmaterial 4 und die Matrize 8 bzw. den Niederhalter 12 erzeugt. Nachfolgend ist eine bevorzugte Ausführungsform beschrieben, bei der das Fluid durch Luft bzw. Druckluft gebildet ist. Es versteht sich, dass auch andere Fluide, insbesondere Gase verwendet werden können.

Zum Zuführen des Fluids weist die erste Lagerfläche 16 der Matrize 8 zumindest eine und bevorzugt, wie dargestellt, eine Mehrzahl von ersten Öffnungen 32 auf, die mit einer ersten Fluid- bzw. Druckluftquelle 34 in Fluidverbindung steht. Die zweite Lagerfläche 18 des Niederhalters 12 weist zumindest eine und bevorzugt, wie dargestellt, eine Mehrzahl von zweiten Öffnungen 36 auf, die mit einer zweiten Fluid- bzw. Druckluftquelle 38 in Fluidverbindung steht. Mittels der Mehrzahl von ersten und zweiten Öffnungen 32, 36 kann Druckluft zwischen die jeweilige Lagerfläche 16, 18 und das Verpackungsmaterial 4 geleitet und gleichmäßig verteilt werden. Die Mehrzahl von ersten Öffnungen 16 und die Mehrzahl von zweiten Öffnungen 18 können durch Bohrungen in der Matrize 8 bzw. im Niederhalter 12 gebildet werden. Es versteht sich, dass jeweils auch nur eine erste bzw. eine zweite Öffnung 32, 36 vorgesehen sein kann, die die Ausnehmung 10 vorzugsweise vollständig umgibt. Eine solche erste bzw. zweite Öffnung 32, 36 kann beispielsweise schlitzförmig in der jeweiligen Lagerfläche 16, 18 ausgebildet sein.

Alternativ kann die dargestellte erste Lagerkomponente 40 der Matrize 8, die die Ausnehmung 10 umgibt und die erste Lagerfläche 16 aufweist, aus einem porösen Material, insbesondere aus einem Sintermaterial, gebildet sein, das eine Vielzahl von Poren aufweist, die die Mehrzahl von ersten Öffnungen 32 bildet. Unabhängig davon kann die dargestellte zweite Lagerkomponente 42 des Niederhalters 12, die den Stempel 20 umgibt und die zweite Lagerfläche 18 aufweist, aus einem porösen Material, insbesondere aus einem Sintermaterial, gebildet sein, das eine Vielzahl von Poren aufweist, die die Mehrzahl von zweiten Öffnungen 36 bildet.

Ein aus der Mehrzahl von ersten Öffnungen 32 austretender erster Luftstrom sowie ein aus der Mehrzahl von zweiten Öffnungen 36 austretender zweiter Luftstrom sind grundsätzlich auf das Verpackungsmaterial 4 gerichtet, um das erste bzw. zweite aerostatische Lager 28, 30 zu bilden. Ist es gewünscht, dass das Verpackungsmaterial 4 beim Formen durch den Stempel 20 in die Ausnehmung 10 um den Radius 19 nachgeführt wird, kann die Mehrzahl von ersten und zweiten Öffnungen 32, 36 derart ausgebildet sein, dass der erste und der zweite Luftstrom jeweils eine Strömungsrichtung aufweisen, die zumindest teilweise in Richtung der Ausnehmung 10 gerichtet ist, wie in Fig. 3 durch die Pfeile zwischen dem Verpackungsmaterial und der Matrize 8 bzw. dem Niederhalter 12 dargestellt.

In Fig. 4 ist die zweite Lagerfläche 18 des Niederhalters 12 in einer Draufsicht dargestellt. Die zweite Lagerfläche 18 kann eine Mehrzahl von Segmenten 44a-44h aufweisen, wobei bevorzugt eine Fluid- bzw. Druckluftzufuhr zumindest eines ersten Teils der Mehrzahl von Segmenten 44a-44h unabhängig von einer Fluid- bzw. Druckluftzufuhr eines zweiten Teils der Mehrzahl von Segmenten 44a-44h regulierbar ist. Dadurch kann der Druck und somit die auf das Verpackungsmaterial 4 wirkende Haltekraft in den jeweiligen Teilen der Mehrzahl von Segmenten nach Bedarf eingestellt werden. Zum Beispiel ist ein erstes Segment 44a der zweiten Lagerfläche 18 mit der zweiten Druckluftquelle 38 verbunden, wie in Fig. 4 schematisch angedeutet. Ein zweites und ein drittes Segment 44b und 44h, die an das erste Segment 44a angrenzen, können mit einer dritten Druckluftquelle 46 in Fluidverbindung stehen, die unabhängig von der zweiten Druckluftquelle 38 regulierbar ist. Das zweite und das dritte Segment 44b, 44h können in Eckbereichen des Niederhalters 12 und der damit korrespondierenden Ausnehmung 10 angeordnet sein. Die erste Lagerfläche 16 der Matrize 8 weist vorzugsweise auf analoge Art und Weise eine Mehrzahl von Segmenten auf, sodass die bezüglich Fig. 4 beschriebenen Merkmale analog auf die Matrize 8 zutreffen.

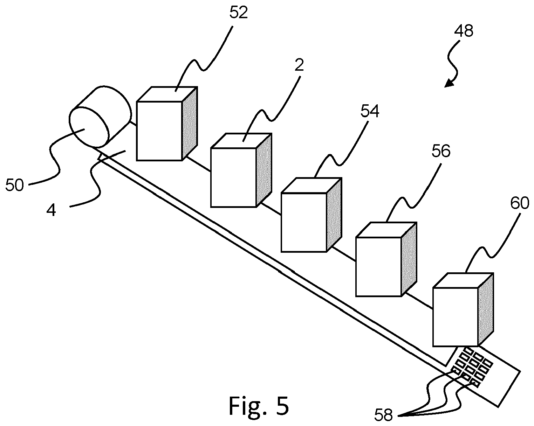

Fig. 5 zeigt schematisch eine Verpackungsmaschine 48 in einer perspektivischen Ansicht. Die Verpackungsmaschine 48 umfasst die erfindungsgemäße Formvorrichtung 2 zum Formen zumindest eines Napfs in das Verpackungsmaterial 4. Das Verpackungsmaterial 4 ist hier im Wesentlichen bahnförmig ausgebildet, auf einer Vorratsrolle 50 bereitgestellt und durchläuft eine Mehrzahl von Bearbeitungsstationen der Verpackungsmaschine 48, die nachfolgend detailliert beschrieben sind. Das Verpackungsmaterial 4 kann aber auch als flächiger Zuschnitt bereitgestellt werden, der in die einzelnen Bearbeitungsstationen eingelegt wird.

Die Verpackungsmaschine 48 kann weiterhin eine Konditioniervorrichtung 52 umfassen. Ist das Verpackungsmaterial 4 beispielsweise als thermoplastische Formfolie ausgebildet, kann die Konditioniervorrichtung 52 eine Heizstation sein, die das Verpackungsmaterial 4 erwärmt. Ist das Verpackungsmaterial 4 hingegen ein faserbasiertes Verpackungsmaterial, kann die Konditioniervorrichtung 52 beispielsweise zum Befeuchten des Verpackungsmaterials 4 eingerichtet sein. Die Formvorrichtung 2 ist vorzugsweise der Konditioniervorrichtung 52 nachgeordnet.

Des Weiteren umfasst die Verpackungsmaschine 48 eine Füllvorrichtung 54 zum Füllen zumindest eines Produkts in den mindestens einen Napf, der durch die Formvorrichtung 2 im Verpackungsmaterial 4 ausgebildet wurde. Um den mindestens einen Napf, der mit zumindest einem Produkt befüllt ist, zu verschließen, umfasst die Verpackungsmaschine 48 eine Schließvorrichtung 56, in der ein Deckmaterial (nicht dargestellt) auf das Verpackungsmaterial 4 aufgebracht wird. Die Schließvorrichtung 56 kann beispielsweise dazu eingerichtet sein, das Deckmaterial an das Verpackungsmaterial 4 zu kleben oder zu siegeln.

Insbesondere bei Verwendung eines bahnförmigen Verpackungsmaterials 4 kann es gewünscht sein, einzelne Verpackungen 58 herzustellen, die jeweils zumindest einen gefüllten und verschlossenen Napf umfassen. Hierzu umfasst die Verpackungsmaschine 48 optional eine Stanzvorrichtung 60, die dazu eingerichtet ist, die einzelnen Verpackungen 58 aus dem Verpackungsmaterial 4, das bevorzugt bereits mit dem Deckmaterial versehen ist, zu stanzen bzw. zu schneiden.

In einer besonders bevorzugten Ausführungsform ist die Verpackungsmaschine als Blistermaschine ausgebildet, die Blisterpackungen für medizinische oder pharmazeutische Produkte, Konsumgüter oder Kosmetikprodukte oder für Nahrungs- und Nahrungsergänzungsmittel herstellt.

Ein Ausführungsbeispiel des erfindungsgemäßen Verfahrens wird nachfolgend unter Bezugnahme auf die Figuren 1 bis 4 beschrieben.

Zunächst wird das Verpackungsmaterial 4 zwischen der Matrize 8 und dem Niederhalter 12 der Formvorrichtung 2 positioniert, wie in Fig. 1 dargestellt. Vorzugsweise ist dabei die Unterseite 4b des Verpackungsmaterials der Matrize 8 zugewandt und liegt auf der ersten Lagerfläche 16 der Matrize 8 auf. Die Oberseite 4a des Verpackungsmaterials 4 ist folglich dem Niederhalter 12 zugewandt. Das Verpackungsmaterial 4 bedeckt die Ausnehmung 10 bevorzugt vollständig, liegt also um die gesamte Ausnehmung 10 auf dem Flansch 17 der Matrize 8 auf.

Ist das Verpackungsmaterial positioniert, wird die Formvorrichtung 2 durch eine Relativbewegung zwischen der Matrize 8 und dem Niederhalter 12 geschlossen. In Fig. 1 ist die Formvorrichtung 2 im geschlossenen Zustand dargestellt. Durch eine Relativbewegung zwischen der Matrize 8 und dem Niederhalter 12, beispielsweise durch Anheben und Absenken des Niederhalters 12, parallel zu Hubrichtung H wird die Formvorrichtung 2 geöffnet und geschlossen.

Bei geschlossener Formvorrichtung 2 können nun das erste und das zweite aerostatische Lager 28, 30, die in Fig. 3 dargestellt sind, zwischen dem Verpackungsmaterial 4 und dem Niederhalter 12 bzw. der Matrize 8 gebildet werden. Hierzu wird Fluid zwischen die erste bzw. die zweite Lagerfläche 16, 18 und das Verpackungsmaterial 4 geleitet. Es versteht sich, dass bereits eines aus erstem und zweitem aerostatischen Lager 28, 30 vorteilhaft ist und nicht notwendigerweise beide aerostatischen Lager 28, 30 vorzusehen sind. Mittels der aerostatischen Lager 28, 30 wird im Haltebereich 14, der die Ausnehmung 10 umgibt, eine Haltekraft auf das Verpackungsmaterial 4 ausgeübt.

Daraufhin kann das Formen des Verpackungsmaterials 4 mittels des Stempels 20 in die Ausnehmung 10 der Matrize 8 erfolgen, wie in Fig. 2 dargestellt. Hierzu wird der Stempel 20 in Bewegungsrichtung B bewegt und erfasst mittels des freien Endes 22 das Verpackungsmaterial 4. Der Stempel 20 zieht das Verpackungsmaterial 4 in die Ausnehmung 10 und bildet dadurch den Napf 6 im Verpackungsmaterial 4.

Die beim Umformen des Verpackungsmaterials 4 erzeugten Kräfte bzw. Spannungen können vor allem in besonders beanspruchten Bereichen des Verpackungsmaterials 4 zur Faltenbildung (bei Druckspannungen) oder Rissen (bei Zugspannungen) führen. Dieser kann mittels der Haltekraft entgegenwirkt werden. Bevorzugt umfasst das Verfahren daher das Ermitteln der zu erwartenden Zugkraft sowie das Ermitteln der Haltekraft in Abhängigkeit von der ermittelten Zugkraft. Die aerostatischen Lager 28, 30 können dann in Abhängigkeit von der ermittelten Haltekraft gebildet werden. Insbesondere kann die Haltekraft durch Einstellen des Drucks der zur Bildung der aerostatischen Lager 28, 30 zugeführten Druckluft eingestellt werden.

Um die Haltekraft gezielt in besonders beanspruchten Bereichen des Verpackungsmaterials 4 zu erhöhen, ist es bevorzugt, dass zumindest eine aus erster und zweiter Lagerfläche 16, 18 und vorzugsweise beide Lagerflächen 16, 18 eine Mehrzahl von Segmenten 44 aufweisen, wie in Fig. 4 dargestellt. Das Bilden des ersten bzw. zweiten aerostatischen Lagers 28, 30 kann dann das Abgeben von Druckluft mit einem ersten Druck in einem ersten Segment 44a der Mehrzahl von Segmenten 44 und das Abgeben von Druckluft mit einem zweiten Druck in zumindest einem zweiten Segment 44b, 44h der Mehrzahl von Segmenten 44 umfassen. Dabei unterscheiden sich der erste und der zweite Druck voneinander.

Weitere Ausführungsformen der erfindungsgemäßen Formvorrichtung 2 und des erfindungsgemäßen Verfahrens sind dem Fachmann basierend auf der Beschreibung der in den Fig. 1 bis 5 dargestellten Ausführungsform ersichtlich.

## Patentansprüche

1. Formvorrichtung (2) zum Formen mindestens eines Napfs (6) in ein Verpackungsmaterial (4), wobei die Formvorrichtung (2) zumindest umfasst:
eine Matrize (8), die mindestens eine Ausnehmung (10) aufweist,
einen Stempel (20), der zum Formen des Verpackungsmaterials (4) in die mindestens eine Ausnehmung (10) der Matrize (8) eingerichtet ist, und
einen Niederhalter (12), wobei der Niederhalter (12) und die Matrize (8) dazu eingerichtet sind, das Verpackungsmaterial (4) in einem Haltebereich (14), der die mindestens eine Ausnehmung (10) der Matrize (8) umgibt, zwischen sich aufzunehmen,
wobei die Matrize (8) im Haltebereich (14) eine erste Lagerfläche (16) aufweist, die dem Niederhalter (12) zugewandt ist, und der Niederhalter (12) im Haltebereich (14) eine zweite Lagerfläche (18) aufweist, die der Matrize (8) zugewandt ist,
**dadurch gekennzeichnet, dass**
die erste Lagerfläche (16) zumindest eine erste Öffnung (32) aufweist, wobei die zumindest eine erste Öffnung (32) mit einer ersten Fluidquelle (34) in Fluidverbindung steht; und/oder
die zweite Lagerfläche (18) zumindest eine zweite Öffnung (36) aufweist, wobei die zumindest eine zweite Öffnung (36) mit einer zweiten Fluidquelle (38) in Fluidverbindung steht.

2. Formvorrichtung (2) nach Anspruch 1, **dadurch gekennzeichnet, dass** die erste Lagerfläche (16) eine Mehrzahl von ersten Öffnungen (32) aufweist und die Matrize (8) eine erste Lagerkomponente (40) umfasst, die die mindestens eine Ausnehmung (10) umgibt und die erste Lagerfläche (16) aufweist, wobei die erste Lagerkomponente (40) zumindest teilweise aus einem porösen Material, insbesondere aus einem Sintermaterial, gebildet ist, das die Mehrzahl von ersten Öffnungen (32) bereitstellt.

3. Formvorrichtung (2) nach Anspruch 1 oder 2, **dadurch gekennzeichnet, dass** die zweite Lagerfläche (18) eine Mehrzahl von zweiten Öffnungen (36) aufweist und der Niederhalter (12) eine zweite Lagerkomponente (42) umfasst, die den Stempel (20) umgibt und die zweite Lagerfläche (18) aufweist, wobei die zweite Lagerkomponente (42) zumindest teilweise aus einem porösen Material, insbesondere aus einem Sintermaterial, gebildet ist, das die Mehrzahl von zweiten Öffnungen (36) bereitstellt.

4. Formvorrichtung (2) nach Anspruch 1, **dadurch gekennzeichnet, dass** die erste Lagerfläche (16) eine Mehrzahl von ersten Öffnungen (32) bzw. die zweite Lagerfläche (18) eine Mehrzahl von zweiten Öffnungen (36) aufweist, wobei die Mehrzahl von ersten bzw. zweiten Öffnungen (32, 36) durch eine Mehrzahl von Bohrungen gebildet ist.

5. Formvorrichtung (2) nach einem der vorangehenden Ansprüche, **dadurch gekennzeichnet, dass** die zweite Lagerfläche (18) des Niederhalters (12) eine Mehrzahl von Segmenten (44a-h) aufweist, wobei eine Fluidzufuhr zumindest eines ersten Segments (44a) der Mehrzahl von Segmenten (44a-h) unabhängig von einer Fluidzufuhr zumindest eines weiteren Segments (44b-h) der Mehrzahl von Segmenten (44a-h) regulierbar ist.

6. Formvorrichtung (2) nach einem der vorangehenden Ansprüche, **dadurch gekennzeichnet, dass** die zumindest eine erste Öffnung (32) derart ausgebildet ist, dass ein aus ihr austretender Fluidstrom eine Strömungsrichtung aufweist, die zumindest teilweise in Richtung der mindestens einen Ausnehmung (10) gerichtet ist.

7. Formvorrichtung (2) nach einem der vorangehenden Ansprüche, **dadurch gekennzeichnet, dass** die zumindest eine zweite Öffnung (36) derart ausgebildet ist, dass ein aus ihr austretender Fluidstrom eine Strömungsrichtung aufweist, die zumindest teilweise in Richtung der mindestens einen Ausnehmung (10) gerichtet ist.

8. Verpackungsmaschine umfassend eine Formvorrichtung (2) nach einem der Ansprüche 1 bis 7, eine Füllvorrichtung (54) zum Befüllen des mindestens einen Napfs (6) mit einem Produkt und eine Schließvorrichtung (56) zum Verschließen des mindestens einen befüllten Napfs (6).

9. Verfahren zum Formen mindestens eines Napfs (6) in ein Verpackungsmaterial (4) mittels einer Formvorrichtung (2), wobei das Verfahren die folgenden Schritte umfasst:
Positionieren des Verpackungsmaterials (4) zwischen einer Matrize (8) und einem Niederhalter (12) der Formvorrichtung (2);
Schließen der Formvorrichtung (2) durch eine Relativbewegung zwischen der Matrize (8) und dem Niederhalter (12);
Bilden eines aerostatischen Lagers (28, 30) zwischen dem Verpackungsmaterial (4) und dem Niederhalter (12) und/oder zwischen dem Verpackungsmaterial (4) und der Matrize (8); und
Einformen des Verpackungsmaterials (4) mittels eines Stempels (20) der Formvorrichtung (2) in mindestens eine Ausnehmung (10) der Matrize (8).

10. Verfahren nach Anspruch 9, **dadurch gekennzeichnet, dass** das aerostatische Lager (28, 30) eine Haltekraft auf das Verpackungsmaterial (4) bewirkt, wobei das Verfahren weiterhin umfasst:
Bestimmen einer Reibungskraft in Abhängigkeit von einer Geometrie des mindestens einen Napfs (6), wobei die Reibungskraft zum Minimieren einer Faltenbildung um den mindestens einen Napf (6) erforderlich ist;
Ermitteln der Haltekraft in Abhängigkeit von der bestimmten Reibungskraft; und
Bilden des aerostatischen Lagers (28, 30) in Abhängigkeit von der ermittelten Haltekraft.

11. Verfahren nach Anspruch 9 oder 10, **dadurch gekennzeichnet, dass** das Bilden des aerostatischen Lagers (28, 30) umfasst:
Erzeugen eines ersten Fluidpolsters zwischen einer ersten Lagerfläche (16) der Matrize (8) und dem Verpackungsmaterial (4) und dadurch Bilden eines ersten aerostatischen Lagers (28); und/oder
Erzeugen eines zweiten Fluidpolsters zwischen einer zweiten Lagerfläche (18) des Niederhalters (12) und dem Verpackungsmaterial (4) und dadurch Bilden eines zweiten aerostatischen Lagers (30).

12. Verfahren nach Anspruch 11, **dadurch gekennzeichnet, dass** das Erzeugen des ersten Fluidpolsters das Zuführen eines Fluids zwischen die Matrize (8) und das Verpackungsmaterial (4) über die erste Lagerfläche (16) umfasst.

13. Verfahren nach Anspruch 11 oder 12, **dadurch gekennzeichnet, dass** das Erzeugen des zweiten Fluidpolsters das Zuführen eines Fluids zwischen den Niederhalter (12) und das Verpackungsmaterial (4) über die zweite Lagerfläche (18) umfasst.

14. Verfahren nach einem der Ansprüche 11 bis 13, **dadurch gekennzeichnet, dass** die erste Lagerfläche (16) der Matrize (8) und/oder die zweite Lagerfläche (18) des Niederhalters (12) jeweils eine Mehrzahl von Segmenten (44a-h) aufweist und das Bilden des aerostatischen Lagers (28, 30) umfasst:
Abgeben eines Fluids mit einem ersten Druck in einem ersten Segment (44a) der jeweiligen Mehrzahl von Segmenten (44a-h); und
Abgeben eines Fluids mit einem zweiten Druck in einem zweiten Segment (44b) der jeweiligen Mehrzahl von Segmenten (44a-h), wobei sich der erste und der zweite Druck unterscheiden.

15. Verfahren nach einem der Ansprüche 9 bis 14, **dadurch gekennzeichnet, dass** das Bilden des aerostatischen Lagers (28, 30) das Erzeugen zumindest eines Fluidstroms umfasst, der ausgehend von der Matrize (8) bzw. dem Niederhalter (12) auf das Verpackungsmaterial (4) und zumindest teilweise entlang des Verpackungsmaterials (4) in Richtung der mindestens einen Ausnehmung (10) der Matrize (8) gerichtet ist.

## Claims

1. Forming device (2) for forming at least one cup (6) into a packaging material (4), wherein the forming device (2) comprises at least:
a die (8), which has at least one recess (10),
a punch (20), which is configured to form the packaging material (4) into the at least one recess (10) of the die (8), and
a hold-down device (12), wherein the hold-down device (12) and the die (8) are configured to receive the packaging material (4) between them in a holding region (14) that surrounds the at least one recess (10) of the die (8),
wherein the die (8) has, in the holding region (14), a first bearing surface (16), which faces the hold-down device (12), and the hold-down device (12) has, in the holding region (14), a second bearing surface (18), which faces the die (8),
**characterized in that**
the first bearing surface (16) has at least one first opening (32), wherein the at least one first opening (32) is in fluid communication with a first fluid source (34); and/or
the second bearing surface (18) has at least one second opening (36), wherein the at least one second opening (36) is in fluid communication with a second fluid source (38).

2. Forming device (2) according to Claim 1, **characterized in that** the first bearing surface (16) has a plurality of first openings (32) and the die (8) comprises a first bearing component (40), which surrounds the at least one recess (10) and comprises the first bearing surface (16), wherein the first bearing component (40) is formed at least partially from a porous material, in particular from a sintered material, which provides the plurality of first openings (32).

3. Forming device (2) according to Claim 1 or 2, **characterized in that** the second bearing surface (18) has a plurality of second openings (36) and the hold-down device (12) comprises a second bearing component (42), which surrounds the punch (20) and has the second bearing surface (18), the second bearing component (42) being formed at least partially from a porous material, in particular from a sintered material, which provides the plurality of second openings (36).

4. Forming device (2) according to Claim 1, **characterized in that** the first bearing surface (16) has a plurality of first openings (32) and the second bearing surface (18) has a plurality of second openings (36), respectively, wherein the plurality of first openings (32) and the plurality of second openings (36) is formed by a plurality of bores, respectively.

5. Forming device (2) according to any of the preceding claims, **characterized in that** the second bearing surface (18) of the hold-down device (12) has a plurality of segments (44a-h), wherein a fluid supply at least to a first segment (44a) of the plurality of segments (44a-h) can be regulated independently of a fluid supply at least to a further segment (44b-h) of the plurality of segments (44a-h).

6. Forming device (2) according to any of the preceding claims, **characterized in that** the at least one first opening (32) is designed in such a way that a fluid flow emerging from it has a flow direction which is directed at least partially in the direction of the at least one recess (10).

7. Forming device (2) according to any of the preceding claims, **characterized in that** the at least one second opening (36) is designed in such a way that a fluid flow emerging from it has a flow direction which is directed at least partially in the direction of the at least one recess (10).

8. Packaging machine comprising a forming device (2) according to any of Claims 1 to 7, a filling device (54) for filling the at least one cup (6) with a product, and a closing device (56) for closing the at least one filled cup (6).

9. Method for forming at least one cup (6) into a packaging material (4) by means of a forming device (2), wherein the method comprises the following steps:
positioning the packaging material (4) between a die (8) and a hold-down device (12) of the forming device (2);
closing the forming device (2) by a relative movement between the die (8) and the hold-down device (12);
forming an aerostatic bearing (28, 30) between the packaging material (4) and the hold-down device (12) and/or between the packaging material (4) and the die (8); and
forming the packaging material (4) into at least one recess (10) of the die (8) by means of a punch (20) of the forming device (2).

10. Method according to Claim 9, **characterized in that** the aerostatic bearing (28, 30) produces a holding force on the packaging material (4), wherein the method further comprises:
determining a frictional force in accordance with a geometry of the at least one cup (6), wherein the frictional force is required to minimize creasing around the at least one cup (6);
determining the holding force in accordance with the determined frictional force; and
forming the aerostatic bearing (28, 30) in accordance with the determined holding force.

11. Method according to Claim 9 or 10, **characterized in that** the formation of the aerostatic bearing (28, 30) comprises:
generating a first fluid cushion between a first bearing surface (16) of the die (8) and the packaging material (4) and thereby forming a first aerostatic bearing (28); and/or
generating a second fluid cushion between a second bearing surface (18) of the hold-down device (12) and the packaging material (4) and thereby forming a second aerostatic bearing (30).

12. Method according to Claim 11, **characterized in that** the generation of the first fluid cushion comprises supplying a fluid between the die (8) and the packaging material (4) via the first bearing surface (16).

13. Method according to Claim 11 or 12, **characterized in that** the generation of the second fluid cushion comprises supplying a fluid between the hold-down device (12) and the packaging material (4) via the second bearing surface (18).

14. Method according to any of Claims 11 to 13, **characterized in that** the first bearing surface (16) of the die (8) and/or the second bearing surface (18) of the hold-down device (12) each have/has a plurality of segments (44a-h) and the formation of the aerostatic bearing (28, 30) comprises:
discharging a fluid at a first pressure in a first segment (44a) of the respective plurality of segments (44a-h); and
discharging a fluid at a second pressure in a second segment (44b) of the respective plurality of segments (44a-h), wherein the first and second pressures differ.

15. Method according to any of Claims 9 to 14, **characterized in that** the formation of the aerostatic bearing (28, 30) comprises generating at least one fluid flow, which, starting from the die (8) and the hold-down device (12), respectively, is directed onto the packaging material (4) and at least partially along the packaging material (4) in the direction of the at least one recess (10) of the die (8).

## Revendications

1. Dispositif de formage (2) destiné à former au moins une coupelle (6) dans un matériau d'emballage (4), le dispositif de formage (2) comprenant au moins :
une matrice (8), qui possède au moins un creux (10),
un poinçon (20), qui est conçu pour former le matériau d'emballage (4) dans l'au moins un creux (10) de la matrice (8), et
un serre-flan (12), le serre-flan (12) et la matrice (8) étant conçus pour accueillir entre eux le matériau d'emballage (4) dans une zone de maintien (14), laquelle entoure l'au moins un creux (10) de la matrice (8),
la matrice (8) possédant dans la zone de maintien (14) une première surface d'appui (16), qui fait face au serre-flan (12), et le serre-flan (12) possède, dans la zone de maintien (14), une deuxième surface d'appui (18) qui fait face à la matrice (8),
**caractérisé en ce que**
la première surface d'appui (16) possède au moins une première ouverture (32), l'au moins une première ouverture (32) se trouvant en liaison fluidique avec une première source de fluide (34) ; et/ou
la deuxième surface d'appui (18) possède au moins une deuxième ouverture (36), l'au moins une deuxième ouverture (36) se trouvant en liaison fluidique avec une deuxième source de fluide (38).

2. Dispositif de formage (2) selon la revendication 1, **caractérisé en ce que** la première surface d'appui (16) possède une pluralité de premières ouvertures (32) et la matrice (8) comporte un premier composant d'appui (40), qui entoure l'au moins un creux (10) et possède la première surface d'appui (16), le premier composant d'appui (40) étant formé au moins partiellement d'un matériau poreux, notamment d'un matériau fritté, qui fournit la pluralité de premières ouvertures (32).

3. Dispositif de formage (2) selon la revendication 1 ou 2, **caractérisé en ce que** la deuxième surface d'appui (18) possède une pluralité de deuxièmes ouvertures (36) et le serre-flan (12) comporte un deuxième composant d'appui (42), qui entoure le poinçon (20) et possède la deuxième surface d'appui (18), le deuxième composant d'appui (42) étant formé au moins partiellement d'un matériau poreux, notamment d'un matériau fritté, qui fournit la pluralité de deuxièmes ouvertures (36).

4. Dispositif de formage (2) selon la revendication 1, **caractérisé en ce que** la première surface d'appui (16) possède une pluralité de premières ouvertures (32) ou la deuxième surface d'appui (18) possède une pluralité de deuxièmes ouvertures (36), la pluralité de premières ou de deuxièmes ouvertures (32, 36) étant formées par une pluralité de perçages.

5. Dispositif de formage (2) selon l'une des revendications précédentes, **caractérisé en ce que** la deuxième surface d'appui (18) du serre-flan (12) possède une pluralité de segments (44a-h), une amenée de fluide d'au moins un premier segment (44a) de la pluralité de segments (44a-h) pouvant être régulée indépendamment d'une amenée de fluide d'au moins un segment supplémentaire (44b-h) de la pluralité de segments (44ah) .

6. Dispositif de formage (2) selon l'une des revendications précédentes, **caractérisé en ce que** l'au moins une première ouverture (32) est configurée de telle sorte qu'un courant de fluide qui sort de celle-ci présente une direction d'écoulement qui est au moins partiellement dirigée en direction de l'au moins un creux (10) .

7. Dispositif de formage (2) selon l'une des revendications précédentes, **caractérisé en ce que** l'au moins une deuxième ouverture (36) est configurée de telle sorte qu'un courant de fluide qui sort de celle-ci présente une direction d'écoulement qui est au moins partiellement dirigée en direction de l'au moins un creux (10) .

8. Machine d'emballage comprenant un dispositif de formage (2) selon l'une des revendications 1 à 7, un dispositif de remplissage (54) destiné à remplir l'au moins une coupelle (6) avec un produit et un dispositif de fermeture (56) destiné à fermer l'au moins une coupelle (6) remplie.

9. Procédé de formage d'au moins une coupelle (6) dans un matériau d'emballage (4) au moyen d'un dispositif de formage (2), le procédé comprenant les étapes suivantes :
positionnement du matériau d'emballage (4) entre une matrice (8) et un serre-flan (12) du dispositif de formage (2) ;
fermeture du dispositif de formage (2) par un mouvement relatif entre la matrice (8) et le serre-flan (12) ;
formation d'un palier aérostatique (28, 30) entre le matériau d'emballage (4) et le serre-flan (12) et/ou entre le matériau d'emballage (4) et la matrice (8) ; et mise en forme du matériau d'emballage (4) au moyen d'un poinçon (20) du dispositif de formage (2) dans au moins un creux (10) de la matrice (8).

10. Procédé selon la revendication 9, **caractérisé en ce que** le palier aérostatique (28, 30) exerce une force de maintien sur le matériau d'emballage (4), le procédé comprenant en outre :
spécification d'une force de frottement en fonction d'une forme géométrique de l'au moins une coupelle (6), la force de frottement étant nécessaire en vue de réduire au minimum la formation d'un pli autour de l'au moins une coupelle (6) ;
détermination de la force de maintien en fonction de la force de frottement spécifiée ; et
formation du palier aérostatique (28, 30) en fonction de la force de maintien déterminée.

11. Procédé selon la revendication 9 ou 10, **caractérisé en ce que** la formation du palier aérostatique (28, 30) comprend :
génération d'un premier matelas de fluide entre la première surface d'appui (16) de la matrice (8) et le matériau d'emballage (4) et ainsi formation d'un premier palier aérostatique (28) ; et/ou
génération d'un deuxième matelas de fluide entre la deuxième surface d'appui (18) du serre-flan (12) et le matériau d'emballage (4) et ainsi formation d'un deuxième palier aérostatique (30).

12. Procédé selon la revendication 11, **caractérisé en ce que** la génération du premier matelas de fluide comprend l'amenée d'un fluide entre la matrice (8) et le matériau d'emballage (4) par le biais de la première surface d'appui (16).

13. Procédé selon la revendication 11 ou 12, **caractérisé en ce que** la génération du deuxième matelas de fluide comprend l'amenée d'un fluide entre le serre-flan (12) et le matériau d'emballage (4) par le biais de la deuxième surface d'appui (18).

14. Procédé selon l'une des revendications 11 à 13, **caractérisé en ce que** la première surface d'appui (16) de la matrice (8) et/ou la deuxième surface d'appui (18) du serre-flan (12) possède respectivement une pluralité de segments (44a-h) et la formation du palier aérostatique (28, 30) comprend :
délivrance d'un fluide avec une première pression dans un premier segment (44a) de la pluralité de segments (44a-h) respective ; et
délivrance d'un fluide avec une deuxième pression dans un deuxième segment (44b) de la pluralité de segments (44a-h) respective, la première et la deuxième pression étant différentes.

15. Procédé selon l'une des revendications 9 à 14, **caractérisé en ce que** la formation du palier aérostatique (28, 30) comprend la génération d'au moins un courant de fluide qui, à partir de la matrice (8) ou du serre-flan (12), est dirigé sur le matériau d'emballage (4) et au moins partiellement le long du matériau d'emballage (4) en direction de l'au moins un creux (10) de la matrice (8) .
